# FASCICULE DE BREVET EUROPEEN

(11) **EP 2 802 767 B1**
(45) Date de publication et mention de la délivrance du brevet: **16.06.2021**
(21) Numéro de dépôt: 12819082.4
(22) Date de dépôt: 18.12.2012
(51) Int. Cl.: F02P 5/15, F02P 5/152

(54) **PROCEDE DE COMMANDE DE L'AVANCE POUR L'ALLUMAGE COMMANDE D'UN MOTEUR A COMBUSTION INTERNE**
VERFAHREN ZUM STEUERN DES ZÜNDZEITPUNKTS IN EINEM VERBRENNUNGSMOTOR
METHOD FOR CONTROLLING THE SPARK TIMING IN AN INTERNAL COMBUSTION ENGINE

(30) Priorité: 10.01.2012 FR 1250239
(43) Date de publication de la demande: 19.11.2014
(73) Titulaire: PSA Automobiles SA, 78300 Poissy (FR)
(72) Inventeur: WATTIGNIES, Rudy, F-28130 Maintenon (FR); DEZALOT, Sylvain, F-78000 Versailles (FR); KRETZAS, Efstratios, F-78360 Montesson (FR)
(74) Mandataire: Bourguignon, Eric Pascal Jean
(86) Numéro de dépôt international: PCT/FR2012/052968
(87) Numéro de publication internationale: WO 2013/104842

(56) Documents cités:
- EP-A2- 0 962 652
- EP-A2- 1 277 942
- US-A- 4 949 691
- US-A- 5 243 942
- US-A- 5 445 127
- US-A1- 2008 257 323

## Description

L'invention concerne les moteurs à combustion interne à allumage commandé, et en particulier la commande des valeurs d'avance à l'allumage de tels moteurs.

Dans un moteur à allumage commandé, lors du déclenchement de l'étincelle par la bougie d'allumage, seule une petite fraction du carburant est immédiatement brûlée. La combustion, qui se propage ensuite en front de flamme par couches concentriques, grâce à la conductivité thermique du mélange, possède une vitesse de propagation et met un certain temps à parcourir la chambre de combustion. La vitesse de propagation dépend de l'enceinte de combustion et des caractéristiques physiques du mélange.

Il est ainsi important de déclencher l'étincelle avant que le piston n'atteigne le point mort haut (PMH) sous peine de passer le PMH avant la combustion complète du mélange, et de perdre une part importante du rendement. En revanche un allumage trop précoce risque de provoquer la rupture d'éléments mécaniques. L'avance à l'allumage est donc la différence entre le moment où l'étincelle est déclenchée et celui où le piston atteint son PMH. Cette avance est généralement quantifiée en termes d'angle que forme la bielle par rapport à l'axe du piston au moment du déclenchement de l'étincelle.

La détermination de l'avance à l'allumage la plus favorable permet d'obtenir le couple et/ou le rendement moteur les meilleurs. Le calculateur de contrôle moteur est ainsi en charge du calcul de consignes d'avance en fonction de différents paramètres de fonctionnement du moteur. L'avance est généralement modifiée dynamiquement durant le fonctionnement du moteur. Plus le moteur tourne vite, plus il faut augmenter l'avance. En cas de forte charge demandée au moteur, l'avance doit être réduite.

Ainsi, un certain nombre de situations de fonctionnement du moteur peuvent nécessiter la modification de la consigne d'avance à l'allumage. Cependant, la transition entre une première cible d'avance à l'allumage et une nouvelle cible d'avance à l'allumage ne peut se faire de façon instantanée. En effet, un changement brutal de l'avance à l'allumage appliquée sur le moteur se traduirait par une imprécision des stratégies de pilotage moteur, une instabilité de fonctionnement du moteur et un agrément d'utilisation fortement détériorés.

Par conséquent, le passage de l'application d'une première valeur de consigne d'avance à l'allumage à une deuxième valeur de consigne d'avance à l'allumage se fait en appliquant des valeurs d'avance à l'allumage intermédiaires entre les première et deuxième valeurs, comme à l'exemple du document US5445127A ou US2008/257323A1. Pour cela, on incrémente les valeurs intermédiaires d'avance à l'allumage appliquées après des intervalles prédéterminés de nombre de cycles moteurs.

Cependant, la phase de fonctionnement transitoire entre les première et deuxième valeurs de consigne d'avance à l'allumage induit malgré tout une dégradation de l'agrément d'utilisation du moteur, en particulier lors de fortes variations du régime moteur. L'utilisateur peut en effet ressentir des à-coups de variation de couple durant la phase transitoire en cas de fortes variations de régime.

L'invention vise à résoudre un ou plusieurs de ces inconvénients. L'invention porte ainsi sur un procédé de commande de l'allumage commandé d'un moteur à combustion interne, selon la revendication 1.

L'invention porte également sur un calculateur pour la commande de l'allumage dans un moteur à allumage commandé, selon la revendication 2.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique de la commande d'allumage d'un moteur à combustion interne à allumage commandé ;
- la figure 2 est un diagramme illustrant les calculs effectués selon un exemple de procédé de commande selon l'invention ;
- la figure 3 est un diagramme comparatif de l'évolution de l'avance à l'allumage pour un exemple de mise en oeuvre de l'invention et pour un exemple selon l'état de la technique respectivement ;
- la figure 4 illustre la variation du régime moteur aboutissant au diagramme de la figure 3.

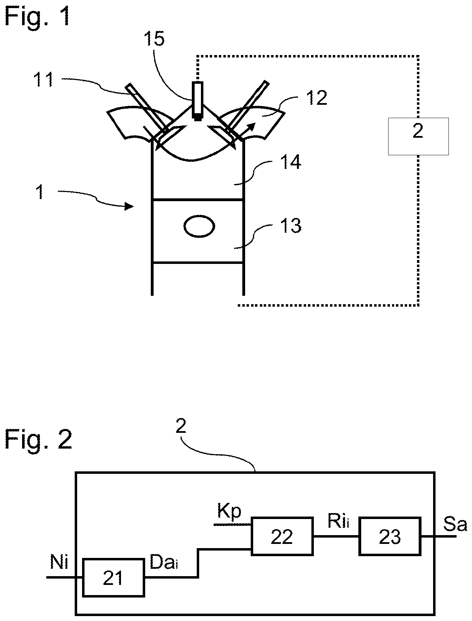

La figure 1 est une vue en coupe schématique d'un moteur à combustion interne 1 au niveau d'un cylindre. Le moteur 1 est un moteur à allumage commandé. Le moteur 1 peut typiquement être monté dans un véhicule automobile.

Le moteur 1 est muni d'un calculateur de contrôle moteur 2. De façon connue en soi, le calculateur de contrôle moteur 2 commande un certain nombre de composants du moteur 1 non représentés (par exemple des injecteurs de carburant, une valve d'admission d'air, une vanne de recyclage des gaz d'échappement, etc...) pour définir les paramètres de fonctionnement de ce moteur 1, en fonction de différentes valeurs mesurées et en fonction de différentes cartographies. Le calculateur de contrôle moteur 2 enregistre également un certain nombre de paramètres de fonctionnement du moteur 1, tels que la température des gaz d'échappement, une température ambiante, une vitesse de rotation du moteur ou encore un couple instantané du moteur.

Un piston 13 est monté coulissant dans une chambre de combustion 14. Une soupape d'admission 11 est commandée par un arbre à came pour mettre sélectivement en communication un conduit d'admission avec la chambre de combustion 14. Une soupape d'échappement 12 est commandée par un arbre à came pour mettre sélectivement en communication une ligne d'échappement avec la chambre de combustion 14. Un injecteur (non représenté) est configuré pour réaliser des injections de carburant directement ou indirectement dans la chambre de combustion 14.

Une bougie d'allumage 15 est commandée par le calculateur 2 pour générer une étincelle dans la chambre de combustion à un instant approprié. Le calculateur 2 commande la génération de l'étincelle avec une avance à l'allumage (généralement définie en degrés d'angle de rotation du vilebrequin par rapport au point mort haut) adaptée aux conditions de fonctionnement du moteur. Le calculateur 2 est capable, de façon connue en soi, d'attribuer différentes valeurs de consigne pour l'avance à l'allumage durant le fonctionnement du moteur 1.

L'invention propose une méthode de commande permettant de réaliser une transition entre une première consigne d'avance à l'allumage et une deuxième consigne d'avance à l'allumage. Initialement, l'allumage du moteur 1 est réalisé avec la première valeur de consigne d'avance. Le calculateur 2 détermine alors une deuxième valeur de consigne d'avance à appliquer.

Pendant une phase transitoire entre l'application des première et deuxième valeurs de consigne d'avance à l'allumage, l'allumage commandé est réalisé avec des valeurs intermédiaires d'avance entre les première et deuxième valeurs de consigne d'avance. Les valeurs intermédiaires d'avance à l'allumage sont fixées selon une progression par application d'incréments entre les valeurs successives. Si la première valeur de consigne est inférieure à la deuxième valeur de consigne, les valeurs intermédiaires sont croissantes. Si la première valeur de consigne est supérieure à la deuxième valeur de consigne, les valeurs intermédiaires sont décroissantes. La valeur d'un incrément est définie en fonction du régime moteur instantané, de sorte que l'incrément croît si le régime moteur instantané décroît.

La durée d'application d'une valeur intermédiaire d'avance est définie en fonction du régime moteur instantané, de sorte que la durée d'application croît si le régime moteur instantané décroît.

Le rapport entre l'incrément d'avance séparant deux valeurs intermédiaires d'avance successives de la progression et la durée d'application correspondante est constant. Ainsi, l'avance à l'allumage varie de façon linéaire entre les deux valeurs de consigne d'avance. Ainsi, les rapports Rii/Dai sont tous égaux à une constante Kp (Dai étant une durée d'application d'une valeur intermédiaire d'avance d'indice i, Rii étant un incrément d'avance d'indice i).

La figure 2 est un diagramme illustrant les calculs effectués selon un exemple de procédé de commande selon l'invention. Le calculateur 2 récupère la valeur Ni du régime moteur instantané. Un module 21 détermine une durée d'application Dai de la valeur intermédiaire d'avance à l'allumage à appliquer. Dai peut être calculée par la relation suivante : Dai = 60 / Ni.

Un module 22 récupère la valeur Dai et la constante Kp. Le module 22 calcule l'incrément Rii à appliquer à la valeur d'avance à l'allumage précédemment appliquée, par la relation Rii = Kp * Dai. Le module 23 applique l'incrément Rii à la valeur intermédiaire d'avance précédente, pour générer la nouvelle valeur intermédiaire d'avance Sai.

Les signaux de synchronisation de l'avance peuvent être déclenchés par un passage du moteur par le point mort haut de combustion, pour ainsi être basés sur la durée d'un cycle moteur ou sur la durée d'un tour de vilebrequin.

Les valeurs de consigne peuvent par exemple inclure une valeur maximale d'avance garantissant l'absence de cliquetis et une valeur minimale garantissant l'obtention d'une combustion. Les différentes valeurs de consignes d'avance sont appliquées en fonction des conditions de fonctionnement du moteur, par exemple pour réaliser une régénération temporaire d'un dispositif de dépollution, lors de l'arrêt de l'actionnement de l'accélérateur.

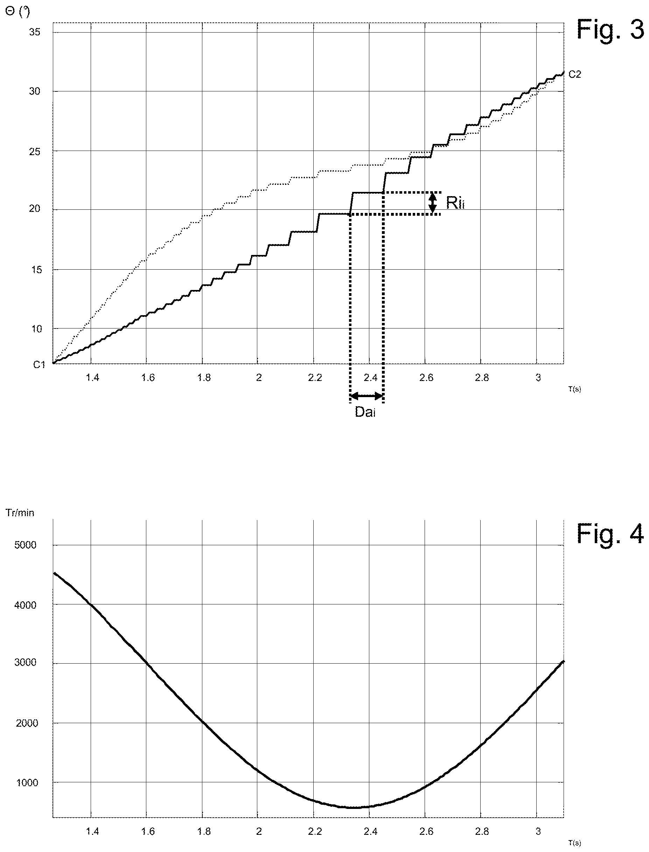

La figure 3 est un diagramme comparatif de l'évolution de l'avance à l'allumage dans le temps, lors du passage d'une première consigne d'avance à l'allumage C1 à une deuxième consigne d'avance à l'allumage C2. La courbe en trait plein correspond à l'évolution de l'avance à l'allumage lors de la mise en oeuvre de l'invention. La courbe en trait discontinu correspond à l'évolution de l'avance à l'allumage selon un procédé de l'état de la technique. La figure 4 représente l'évolution du régime moteur dans le temps, lors du passage de la consigne d'avance à l'allumage C1 à la consigne d'avance à l'allumage C2. Le régime moteur chute ainsi fortement jusqu'à un régime de ralenti avant de remonter assez fortement.

On constate que selon l'état de la technique, l'utilisation d'un incrément fixe dans la progression des avances à l'allumage intermédiaires, combinée à une durée d'utilisation d'une avance intermédiaire proportionnelle aux temps de cycles moteurs, induit une non linéarité des variations d'avance à l'allumage dans le temps. Cette non linéarité temporelle conduit à un ressenti désagréable de variation de couple pour l'utilisateur.

On constate que l'évolution de l'avance à l'allumage avec un procédé selon l'invention est très linéaire, ce qui évite un ressenti désagréable de variation de couple. De plus, la régulation d'autres paramètres de fonctionnement moteur s'en trouve également facilitée. La consommation du moteur et ses émissions polluantes peuvent ainsi être optimisées.

## Revendications

1. Procédé de commande de l'allumage commandé (15) d'un moteur à combustion interne (1), comprenant les étapes de :
• réaliser l'allumage commandé du moteur à combustion interne avec une première valeur de consigne d'avance à l'allumage ;
• déterminer une deuxième valeur de consigne d'avance à l'allumage à appliquer ;
• réaliser l'allumage commandé du moteur à combustion interne avec des valeurs intermédiaires d'avance à l'allumage évoluant selon une progression entre la première valeur de consigne jusqu'à la deuxième valeur de consigne,
**caractérisé en ce que** l'incrément entre deux valeurs intermédiaires successives est défini en fonction du régime moteur instantané, tel que l'incrément croît si le régime moteur décroît, la durée d'application (Dai) d'une valeur intermédiaire d'avance (Sai) étant définie en fonction du régime moteur instantané (Ni) de sorte que la durée d'application (Dai) croît si le régime moteur instantané décroît (Ni) et le rapport entre les durées d'application (Dai) des valeurs intermédiaires d'avance (Sai) et l'incrément (rii) correspondant de la progression étant constant.

2. Calculateur (2) pour la commande de l'allumage dans un moteur à allumage commandé (1), comprenant une interface de réception d'une valeur de régime moteur instantané, **caractérisé en ce qu'**il est configuré pour :
• générer un signal de commande d'allumage avec une première valeur de consigne d'avance à l'allumage (C1) ;
• déterminer une deuxième valeur de consigne d'avance à l'allumage (C2) à appliquer ;
• générer des signaux de commande d'allumage avec des valeurs intermédiaires d'avance à l'allumage évoluant selon une progression entre la première valeur de consigne jusqu'à la deuxième valeur de consigne, l'incrément (rii) entre deux valeurs intermédiaires successives étant défini en fonction du régime moteur instantané, tel que l'incrément croît si le régime moteur décroît.
• appliquer des signaux de commande d'allumage avec des valeurs intermédiaires d'avance respectives pendant une durée d'application (Dai) définie en fonction du régime moteur instantané (Ni) de sorte que la durée d'application (Dai) croît si le régime moteur instantané décroît (Ni) et que le rapport entre les durées d'application (Dai) des valeurs intermédiaires d'avance (Sai) et l'incrément (rii) correspondant de la progression est constant.

## Patentansprüche

1. Verfahren zum Steuern der positiven Zündung (15) eines Verbrennungsmotors (1), umfassend die Schritte :
• Ausführen einer gesteuerten Zündung des Verbrennungsmotors mit einem ersten Zündvorschub-Sollwert ;
• Bestimmen eines zweiten anzuwendenden Zündvorschubsollwerts ;
• Führen Sie die Zündung des Verbrennungsmotors mit den Zwischenwerten vor der Zündung durch, die sich mit einem Anstieg zwischen dem ersten eingestellten Wert und dem zweiten eingestellten Wert entwickelt.
**dadurch gekennzeichnet, dass** das Schrittweite zwischen zwei aufeinander folgenden Zwischenwerten wird definiert als eine Funktion der momentanen Motordrehzahl, wie beispiel daß das Inkrement erhöht, wenn eine Motordrehzahl Düse erhöht, die Dauer der Anwendung (Dai) von einem Zwischenwert des Vorschubs (Sai), das definiert als Funktion der momentanen Motordrehzahl (Ni), so dass die Anwendungszeit (Dai) zunimmt, wenn die momentane Motordrehzahl abnimmt (Ni) und das Verhältnis zwischen den Anwendungszeiten (Dai) der Werte Zwischenvorschub (Sai) und der das entsprechende Inkrement (rii) des Fortschritts ist konstant.

2. Computer (2) zum Steuern der Zündung in einem Fremdzündungsmotor (1), umfassend eine Schnittstelle für ein Empfangen momentanen Motordrehzahlwert ist, **dadurch gekennzeichnet, dass** es für konfiguriert :
• Erzeugen eines Zündungssteuersignal mit einem ersten Zündvorverstellung Sollwert (C1) ;
• Bestimmen eines zweiten anzuwendenden Zündvorschubsollwerts (C2) ;
• Erzeugen von Zündsteuersignalen mit Zwischenzündungsvorschubwerten, die sich gemäß einer Progression zwischen dem ersten Sollwert bis zum zweiten Sollwert entwickeln, wobei das Inkrement (rii) zwischen zwei aufeinanderfolgenden Zwischenwerten gemäß der momentanen Motordrehzahl definiert wird, wie dass das Inkrement zunimmt, wenn die Motordrehzahl abnimmt.
• Anlegen von Zündsteuersignalen mit entsprechenden Zwischenvorschubwerten während einer Anwendungszeit (Dai), die als Funktion der momentanen Motordrehzahl (Ni) definiert ist, so dass die Anwendungszeit (Dai) zunimmt, wenn die Drehzahl des momentanen Motors abnimmt (Ni) und dass Das Verhältnis zwischen den Anwendungszeiten (Dai) der Zwischenvorschubwerte (Sai) und dem entsprechenden Inkrement (rii) des Verlaufs ist konstant.

## Claims

1. A method of controlling the positive ignition (15) of an internal combustion engine (1), comprising the steps of :
• effecting controlled ignition of the internal combustion engine with a first ignition advance setpoint value ;
• determining a second ignition advance setpoint value to be applied ;
• perform the ignition of the internal combustion engine with the intermediate values in advance ignition evolving with an increase between the first set value to the second set value,
**characterized in that** the increment between two successive intermediate values is defined as a function of the instantaneous engine speed, such that the increment increases if an engine speed die increases, the duration of application (Dai) of an intermediate value of advance (Sai) being defined as a function of the instantaneous engine speed (Ni) so that the application time (Dai) increases if the instantaneous engine speed decreases (Ni) and the ratio between the application times (Dai) of the values intermediate advance (Sai) and the corresponding increment (rii) of the progression being constant.

2. Computer (2) for controlling the ignition in a positive-ignition engine (1), comprising an interface for receiving an instantaneous engine speed value, **characterized in that** it is configured for :
• generating an ignition control signal with a first ignition advance setpoint value (C1) ;
• determining a second ignition advance setpoint value (C2) to be applied ;
• generate ignition control signals with intermediate ignition advance values evolving according to a progression between the first setpoint value up to the second setpoint value, the increment (rii) between two successive intermediate values being defined according to the instantaneous engine speed, such that the increment increases if the engine speed decreases.
• apply ignition control signals with respective intermediate advance values during an application time (Dai) defined as a function of the instantaneous engine speed (Ni) so that the application time (Dai) increases if the speed instantaneous motor decreases (Ni) and that the ratio between the application times (Dai) of the intermediate advance values (Sai) and the corresponding increment (rii) of the progression is constant.
